# EUROPEAN PATENT SPECIFICATION

(11) **EP 3 178 355 B1**
(45) Date of publication and mention of the grant of the patent: **01.05.2019**
(21) Application number: 15830267.9
(22) Date of filing: 03.07.2015
(51) Int. Cl.: A47J 19/02, A47J 19/06, A47J 43/07

(54) **JUICE EXTRACTION APPARATUS INCLUDING SOLID NET, AND JUICER INCLUDING SAME**
SAFTEXTRAKTIONSVORRICHTUNG MIT FESTSTOFFNETZ UND ENTSAFTER DAMIT
APPAREIL D'EXTRACTION DE JUS COMPRENANT UN FILET SOLIDE, ET CENTRIFUGEUSE COMPRENANT CELUI-CI

(30) Priority: 05.08.2014 KR 20140100381
(43) Date of publication of application: 14.06.2017
(73) Proprietor: Coway Co., Ltd., Gongju-si, Chungcheongnam-do 314-895 (KR)
(72) Inventor: MOON, Sung Il, Seoul 151-919 (KR); PARK, Man Uk, Seoul 151-919 (KR); KIM, Seong Wook, Seoul 151-919 (KR)
(74) Representative: Kador & Partner PartG mbB
(86) International application number: PCT/KR2015/006891
(87) International publication number: WO 2016/021837

(56) References cited:
- WO-A2-2012/036454
- CN-A- 103 082 865
- KR-A- 20120 012 040
- KR-A- 20130 042 991
- KR-A- 20150 028 033
- KR-B1- 101 099 429
- US-A1- 2012 291 638

## Description

### BACKGROUND

### 1. Field of the Invention

Embodiments of the present disclosure relate to a juice extracting apparatus comprising a solid-type strainer and a juicer having the same.

### 2. Description of the Related Art

A conventional vertical-type centrifugal juicer (e.g., Korean Registered Patent No. 10-13504) includes a screw structure for crushing and pressing a subject to be extracted such as fruits or vegetables. The screw structure is provided within a drum and includes a strainer. The subject is extracted by the rotation of the screw assembly during passing through the strainer. The subject is thus separated into juice and debris, each of which is discharged to outside through corresponding discharge port. Alternatively, the strainer may be provided between the drum and the screw assembly as a separate component.

When extraction process is finished, the user may want to clean debris off from the strainer. However, cleaning of the strainer may be quite cumbersome and even difficult, because it requires the user to take out the screw assembly from the drum and manually cleanse the interior using hands.

Further, there are a variety of preferences for each user. For example, one user would want only the juice, while another user would want debris (i.e., pulp) too for the preparation of smoothies or milkshakes, or yet another user would want to use the juicer for mincing garlic. However, the related juicer is not able to meet the diverse user preferences.

### [Related Arts]

KR 1013504 B1

US 2012/0291638 A1 discloses a juicer having a smoothie making function including: a lid having a feed tube; a feed screw having a rotating shaft and feeding input food downwards while cutting, crushing and squeezing the food; a housing having a juice outlet and a residue outlet on an outer surface, with a housing discharge hole formed in the bottom of the housing and communicating with the residue outlet; a net drum having an entirely or partially meshed sidewall, with a net drum discharge hole formed in the net drum and communicating with the residue outlet; a motor unit having a housing seat and a drive shaft for rotating the feed screw; and a juice control unit for opening or closing the juice outlet. While in operation, input food circulates through the upper and lower portions of the net drum while being cut, crushed or squeezed, and residue collects in the net drum.

CN 103082865 A discloses a soymilk/juicer with secondary grinding function including an upper body and a lower body, the upper body includes an upper cover connected to the shell, a rotor and a stator arranged in the shell and concentrically arranged, and the stator is nested in the rotor.

### SUMMARY

Accordingly, a main object of an embodiment is to provide a juice extracting apparatus capable of easily changing an operation mode according to various user preferences, and solving problem of difficult cleaning of a screw assembly, and a juicer having the same.

According to an exemplary embodiment, a juicer is provided, which includes a juice extracting apparatus for crushing and compressing a subject to be extracted, wherein a mesh-type strainer (276) and a solid-type strainer (276' or 286) are selectively provided in the juice extracting apparatus.

The juice extracting apparatus may include a hollow drum (100), and a screw assembly (200) disposed within the hollow drum (100). The screw assembly (200) may include a upper assembly (250) provided with a extracting blade (251) on an outer surface, and a lower assembly (270) removably coupled with the upper assembly (250). The mesh-type strainer (276) and the solid-type strainer (276') can be selectively provided in the lower assembly (270).

A mesh-type strainer (276) and a solid-type strainer (276') which are detachably mounted on the lower assembly (270) may be provided.

A lower assembly (270) having a mesh-type strainer (276) fixedly attached thereto, and a lower assembly (270) having a solid-type strainer (276') fixedly attached thereto, may be provided

The solid-type strainer (276') fixedly attached to the lower assembly (270) may be integrally formed with the lower assembly (270).

An extracting rib (271) may be provided on an outer surface of the lower assembly (270), and wherein when the upper assembly (250) and the lower assembly (270) are coupled with each other, the extracting blade (251) and the extracting rib (271) may be continuously connected.

When the solid-type strainer (276') is provided in the juice extracting apparatus, both a juice and a debris produced by a rotation of the screw assembly (200) may not pass through the solid-type strainer (276') and may flow outside the screw assembly (200).

The upper assembly (250) comprises a first portion (A) which is in a conical shape, and a second portion (B) which is in an inverted conical shape.

The lower assembly (270) may be in an inverted conical shape and may be continuously connected to the second portion (B).

A lower portion of the upper assembly (250) may comprise a plurality of protrusions (253), and an upper portion of the lower assembly (270) may comprises a plurality of connecting holes (273) to which the plurality of protrusions (253) can be inserted and fastened.

The connecting holes (273) may be formed of an 'L' shape a lower portion of which extend in a direction of rotation of the screw assembly (200).

The juice extracting apparatus may include a hollow drum (100), a screw assembly (200) disposed within the drum (100), and a strainer drum (280) located between the screw assembly (200) and the drum (100), wherein the mesh-type strainer (276) and the solid-type strainer (286') can be selectively provided in the strainer drum (280).

A mesh-type strainer (276) and a solid-type strainer (286') which are detachably mounted to the strainer drum 280 may be provided.

A strainer drum (280) having the mesh-type strainer 276 fixedly attached thereto, and a strainer drum (280) having the solid-type strainer (286') fixedly attached thereto, may be provided

The solid-type strainer (286') fixedly attached to the strainer drum (280) may be integrally formed with the strainer drum (280).

The user can easily change an operation mode by selecting one of the mesh-type strainer and the solid-type strainer so that any of various preferences of users, such as preference for both juice and debris, or for separate produce, can be satisfied. Additionally, the user can more easily clean the juicer as it is easy to separate the screw assembly.

### BRIEF DESCRIPTION OF THE DRAWINGS

The above and/or other aspects of the present inventive concept will be more apparent by describing certain exemplary embodiments of the present inventive concept with reference to the accompanying drawings, in which:
FIG. 1 is a perspective view of a juicer according to the present invention.
FIG. 2 is an exploded perspective view of the juicer;

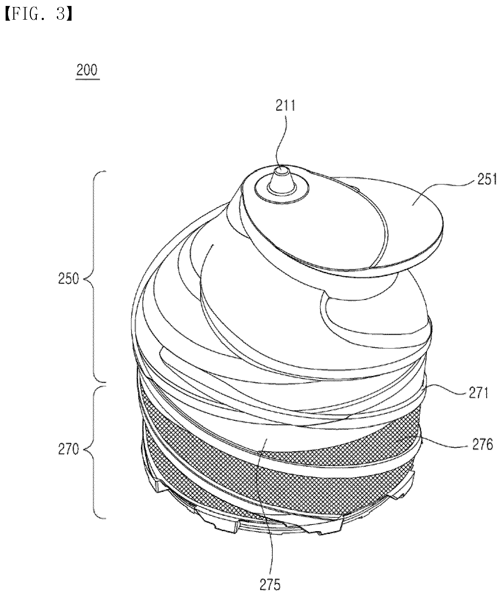

FIG. 3 is a perspective view of a juice extracting apparatus according to the present invention;
FIGS. 4a and 4b are exploded perspective views according to a first embodiment of the juice extracting apparatus;
FIG. 5a is an exploded perspective view of the juice extracting apparatus according to a second embodiment of the juice extracting apparatus;
FIG. 5b is an exploded perspective view of the juice extracting apparatus according to a third embodiment of the juice extracting apparatus;
FIG. 5c is an exploded perspective view of a juice extracting apparatus according to a embodiment of the juice extracting apparatus; and
FIG. 6 is a cross sectional view of the juice extracting apparatus according to the present invention.

### DETAILED DESCRIPTION OF EXEMPLARY EMBODIMENTS

Certain exemplary embodiments of the present inventive concept will now be described in greater detail with reference to the accompanying drawings.

A juicer having a juice extracting apparatus will be explained by referring to an exemplary embodiment. However, the same principle is applicable to any device other than the juicer. Accordingly, it would be apparent that the scope of the inventive concept according to the accompanying claims is applicable to other devices having a juice extracting apparatus applying the same principle.

A juice extracting apparatus and a juicer according to an exemplary embodiment will now be explained below with reference to the accompanying drawings. The thickness of lines or the size of the elements illustrated in the drawings may be exaggerated for clarity and convenience of the explanation. Further, terms described below are those defined in consideration of the functions in the present disclosure and may vary depending on the intention of an operator or practice. Accordingly, definitions of the terms will have to be described based on the overall content of the present disclosure.

### 1. Configuration of juicer 500

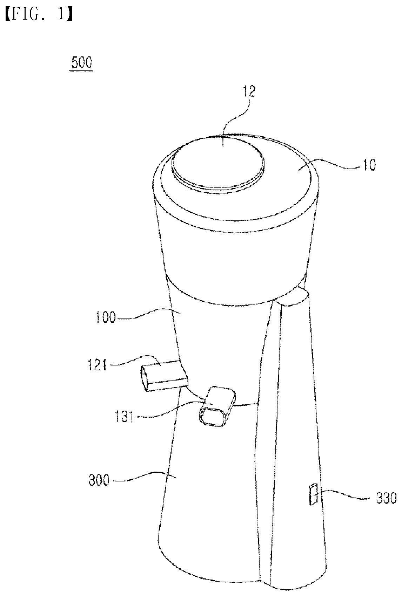

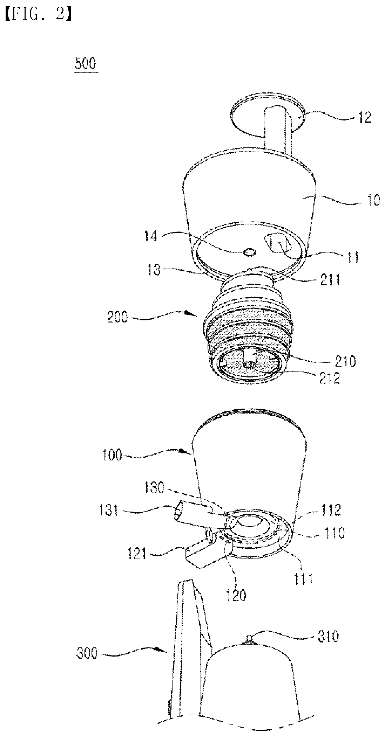

First, referring to FIGS. 1 and 2, the overall configuration of the juicer 500 according to an embodiment will be described below.

The juicer 500 includes a cover 10, a drum 100, a screw assembly 200 rotatably disposed within the drum 100, and a main body 300 coupled to a lower portion of the drum 100. Hereinbelow, a "juice extracting apparatus" will be referred as a concept that comprises both the drum 100 and the screw assembly 200.

The cover 10 includes an inlet 11 through which a subject to be extracted is introduced, a fastening jaw 13 formed on a bottom surface, and a shaft fixing hole 14 formed at a center of the bottom surface. A bar-type feeding rod may be used to push the subject into the inlet 11. Referring to FIG. 2, the inlet 11 may be eccentrically located away from the center of the cover 10, although the location of the inlet 11 is not limited thereto.

The drum 100 has a hollow cylindrical container structure, and includes a guide protrusion 110 protruding in a circular fashion in a predetermined diameter around the center of the bottom inside the drum 100, a first guide groove 111 formed on an outer side with reference to the guide protrusion 110, a second guide groove 112 formed on an inner side with reference to the guide protrusion 110, a debris discharge opening 120, a juice discharge opening 130, a debris discharge port 121 and a juice discharge port 131.

The first guide groove 111 is formed outside the guide protrusion 110 in a circular fashion in a diameter larger than the guide protrusion 110 around the center of the drum 100, and the first guide groove 111 has the debris discharge opening 120 vertically penetrating through the bottom surface of the drum 100.

The second guide groove 112 is formed inside the guide protrusion 110 in a circular fashion around the center of the drum 100 in a diameter smaller than that of the guide protrusion 110. The second guide groove 112 has the juice discharge opening 130 vertically penetrating through the bottom surface of the drum 100.

The debris discharge port 121 and the juice discharge port 131, which are in fluid communication with the debris discharge opening 120 and the juice discharge opening 130, respectively, extend outside the drum 100 to facilitate discharge of the debris and the juice to outside.

That is, the subject to be extracted is separated into the juice and the debris by the rotational force of the screw assembly 200 while passing through the screw assembly 200. The separated juice passes through a mesh-type strainer 276, flows downwardly inside the screw assembly 200, flows along the second guide groove 112 and then passes through the debris discharge opening 130 and the juice discharge port 131 to be discharged outside. Meanwhile, the separated debris is not permitted to pass through the mesh-type strainer 276. Thus, the separated debris flows along an outer surface of the screw assembly 200, flows along the first guide groove 111, and then passes through the debris discharge opening 120 and the debris discharge port 121 to be discharged outside.

Meanwhile, the extraction rate can be deteriorated if the debris is discharged at once at an early stage of extraction process. Accordingly, the debris discharge port 121 may be additionally provided with an elastic packing member (not illustrated) to open the debris discharge port 121 only after an accumulated amount of the debris reaches a predetermined level.

The main body 300 may be formed so that an upper portion thereof is sized to correspond to the bottom surface of the drum 100. The main body 300 is inserted into the lower portion of the drum 100 and coupled to it

The main body 300 includes therein a rotational driving unit such as a motor, and a power switch 330 disposed on an outer surface of the main body 300.

The rotational driving unit includes a motor shaft 310 which is inserted and fastened into a shaft hole 212 formed on a screw shaft 210 located at a lower portion of the screw assembly 200 to thus rotate the screw shaft 210. Accordingly, the screw assembly 200 having the screw shaft 210 is rotated.

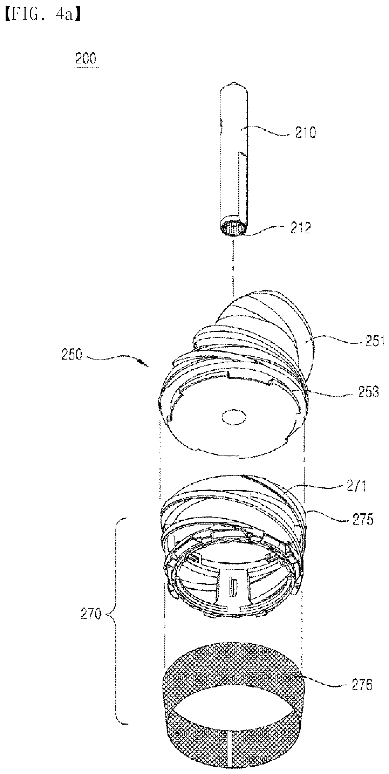

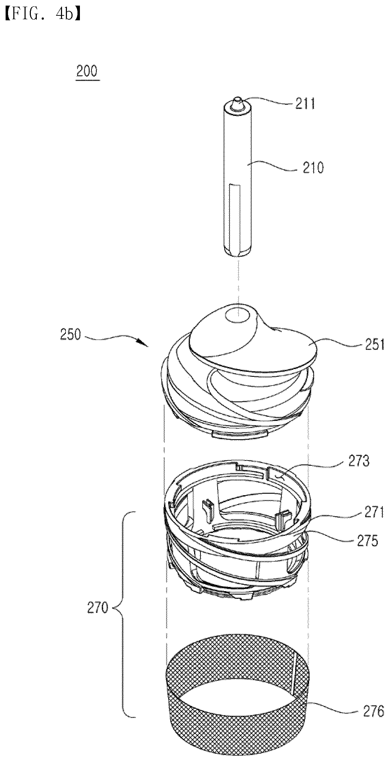

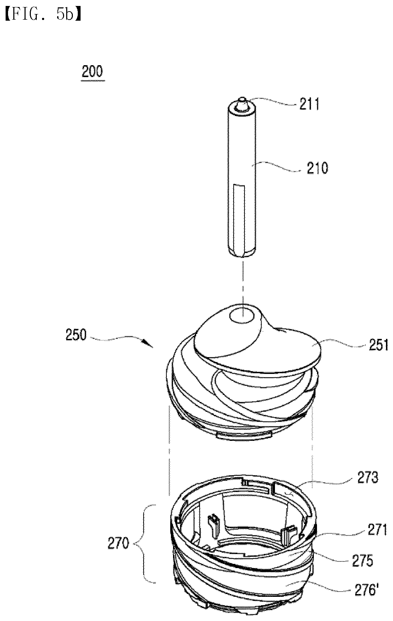

FIGS. 4a and 4b illustrate an example in which a mesh-type strainer 276 is provided, FIG. 5b illustrates an example in which a solid-type strainer 276' is removably provided, and FIG. 5b illustrates an example in which the solid-type strainer 276' is integrally provided.

The screw assembly 200 has upper and lower portions which are separable to each other. Accordingly, it is possible to select between the mesh-type strainer 276 and the solid-type strainer 276'. Further, it is possible to select between a lower assembly 270 having the mesh-type strainer 276 attached thereto and a lower assembly 270 having the solid-type strainer 276' attached thereto.

The screw assembly 200 includes an upper assembly 250 and the lower assembly 270. The upper assembly 250 and the lower assembly 270 are detachably attached to each other.

The screw shaft 210 is located at a center, while penetrating through the upper assembly 250 and the lower assembly 270. As described above, the rotational force is transmitted by the rotational driving unit to the screw shaft 210 so that the rotational movement of the screw shaft causes the screw assembly 200 to rotate. As a result, the subject to be extracted is extracted.

An extracting blade 251 is provided on an outer surface of the upper assembly 250. The extracting blade 251 is provided in a screw form so that the subject to be extracted introduced into the juice extracting apparatus is crushed and compressed by the extracting blade 251.

A plurality of protrusions 253 are provided on a lower surface of the upper assembly 250. The protrusions 253 has a structure which can be inserted a connecting groove 273 provided on upper surface of the lower assembly 270.

An extracting rib 271 is provided on outer surface of the lower assembly 270. The extracting rib 271 serves to assist in crushing and compressing the subject to be extracted, through cooperation with the drum 100.

Preferably, when the upper assembly 250 and the lower assembly 270 are coupled to each other, the extracting rib 271 is continuously connected to the extracting blade 251. This allows the subject to be extracted, the juice, or the debris to be smoothly drawn downward from the upper assembly 250 along the screw-form extracting blade 251 and the extracting rib 271.

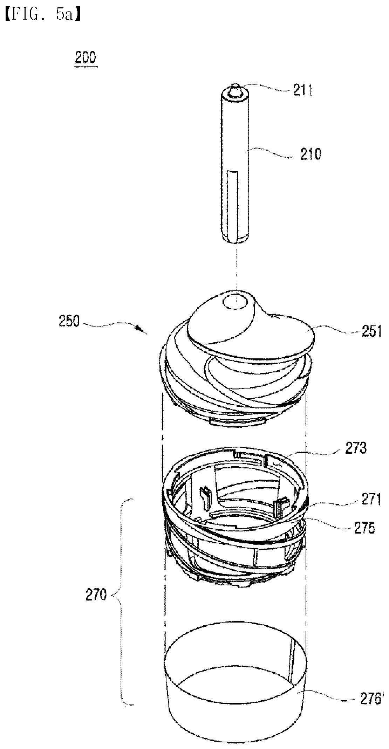

Referring to FIG. 5a, the lower assembly 270 includes a lower body 275 having a plurality of openings, and the solid-type strainer 276' having a plurality of holes. Alternatively, the lower assembly 270 may include the mesh-type strainer 276 as shown in FIG. 4b.

The lower body 275 serves as a framework which maintains the form of the lower assembly 270. The user may select any one of the mesh-type strainer 276 and the solid-type strainer 276' to mount it to the lower body 275. For example, the user may disconnect the upper assembly 250 and the lower assembly 270, remove the mesh-type strainer 276 from the lower assembly 270, and then couple the solid-type strainer 276' to the lower assembly 270.

The mesh-type strainer 276 has a function of passing only the juice through the plurality of holes, while not permitting the debris to pass therethrough. The mesh-type strainer 276 thus serves as a boundary of separating between the juice and the debris.

When the solid-type strainer 276' is mounted, the juice flows outside the screw assembly 200 along with the debris.

When a user wants to separate the juice and the debris from each other, he may select the mesh-type strainer 276. When a user wants to obtain a mixture of the juice and the debris, he may select the solid-type strainer 276'.

Referring to FIG. 5b, the screw assembly 200 may includes one of two kinds of lower assemblies. First one is a lower assembly 270 which has a mesh-type strainer 276 integrally mounted thereto. Second one is a lower assembly 270 which has an solid-type strainer 276' integrally mounted thereto. The lower assembly 270 having the integrated solid-type strainer 276' can be easily fabricated by a single process such as molding process.

The user may select and use any one of the lower assembly 270 having the mesh-type strainer 276 mounted thereto, and the lower assembly 270 having the solid-type strainer 276' mounted thereto. Therefore, convenience of the user can be increased.

Meanwhile, the connecting groove 273 may preferably be in a 'L' shape with a lower portion thereof extending in a direction of rotation of the screw assembly 200. Because the connecting groove 273 is in the 'L' shape, during mounting, the protrusions 253 are first moved downward along the connecting groove 273 and then moved to the lateral direction, thus allowing firm coupling.

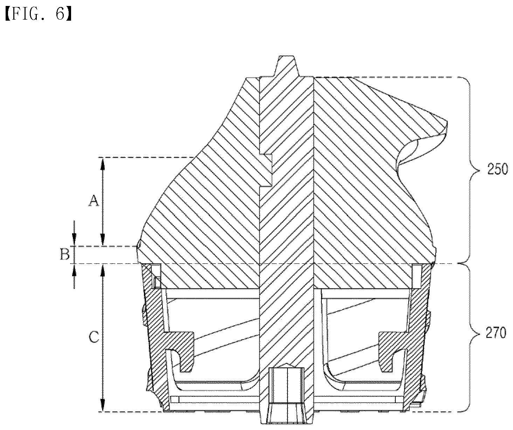

Referring to FIG. 6, the upper assembly 250 includes a first portion A having a conical shape and a second portion B having an inverted conical shape. The lower assembly 270 has an inverted conical shape and continuously extends from the second portion B.

In other words, the overall shape of the screw assembly 200 formed of the upper assembly 250 and the lower assembly 270 coupled with each other may be divided into a upper portion of a conical shape and a lower portion of an inverted conical shape.

Such a structure may be implemented to maintain firm coupling between the upper assembly 250 and the lower assembly 270 during rotation of the screw assembly 200.

While the screw assembly 200 is rotating, thus crushing and compressing the subject to be extracted in cooperation with the drum 100, loads are exerted on the screw assembly 200 in a direction from the upper portion to the lower portion. In this case, the loads at a connecting surface between the upper assembly 250 and the lower assembly 270 can be minimized. Accordingly, firmer coupling between the upper assembly 250 and the lower assembly 270 can be ensured.

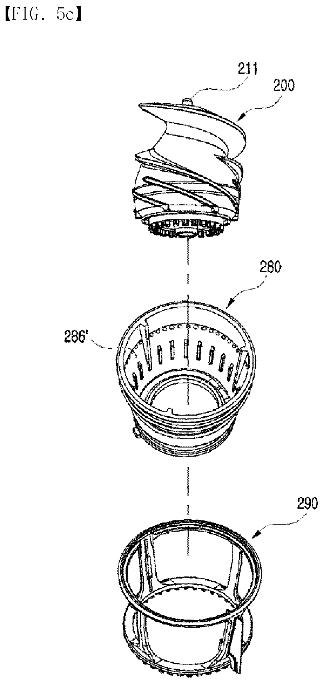

The juice extracting apparatus in shown FIG. 5c additionally includes a strainer drum 280 located between the screw assembly 200 and the drum 100. Additionally, the juice extracting apparatus may also include a brush 290.

The strainer drum 280 may be selectively provided with the mesh-type strainer 276 illustrated in FIG. 4a and the solid-type strainer 286' illustrated in FIG. 5c. According to an exemplary embodiment, each of the mesh-type strainer 276 and the solid-type strainer 286' may be detachably provided on the strainer drum 280. According to an alternative exemplary embodiment, a strainer drum 280 including the mesh-type strainer 276 fixedly attached thereto, and a strainer drum 280 including the solid-type strainer 286' fixedly attached thereto, may be provided. The solid-type strainer 286' fixedly attached to the strainer drum 280 may be integrally formed with the strainer drum 280.

When the strainer drum 280 is provided with the mesh-type strainer 276, the juice is passed through the mesh-type strainer 276 and moved downward along the outer surface of the mesh-type strainer 276 of the strainer drum 280 and discharged, while the debris is not passed through the mesh-type strainer 276 and thus moved downward between the screw assembly 200 and the strainer drum 280 and discharged.

When the strainer drum 280 is provided with the solid-type strainer 286', both the juice and the debris are not permitted to pass through the strainer drum 280, but discharged together along a space defined between the screw assembly 200 and the strainer drum 280.

### 2. Operation of the juicer 500

Hereinbelow, an operation of the juicer 500 according to an exemplary embodiment will be explained with reference to the accompanying drawings.

As a power switch 330 of the juicer 500 is turned on, thus applying power to the juicer 500, the driving unit of the main body 300 is driven, and accordingly, the motor shaft 310 provided therein is rotated to deliver the rotational force to the screw shaft 210 connected to the motor shaft 310.

In response to the rotation of the screw shaft 210, the screw assembly 200 connected thereto is rotated within the drum 100. Accordingly, the juicer 500 starts operating.

As the juicer 500 is operated, the subject to be extracted is introduced into the inlet 11 formed on the cover 10. The introduced subject is crushed and compressed by the screw assembly 200.

A "first mode" in which the mesh-type strainer 276 is used will be explained below. This is the operation mode implementable when the user wants to perform separating of the juice and the debris, as is the usual case of using the juicer. According to the first mode, the mesh-type strainer 276 may be mounted in the lower assembly 275, or the lower assembly 270 with the mesh-type strainer 276 integrated therewith may be mounted, or the mesh-type strainer 276 may be mounted in the strainer drum 280.

The subject to be extracted is introduced through the inlet 11 and separated into the juice and the debris by the screw assembly 200. Both the juice and the debris are moved downward along the outer surface of the screw assembly 200.

As the juice arrives at the mesh-type strainer 276, the juice is moved downward inside the screw assembly 200 and thus passed through the second guide groove 112, the juice discharge opening 130 and the juice discharge port 131 in sequential order, and discharged out.

The debris arriving at the mesh-type strainer 276 is not permitted to pass through the holes of the mesh-type strainer 276, but moved downward outside the screw assembly 200. Accordingly, the debris is passed through the first guide groove 111, the debris discharge opening 120 and the debris discharge port 121 in sequential order and discharged out.

In this manner, the juice and the debris are separately discharged.

A "second mode" in which the solid-type strainer 276' or 286' is used will be explained. This is the mode implementable when the user wants to obtain a mixture of the juice and the debris, which is different from a general use of the juicer. For example, the user may wish to prepare smoothie, milkshake, sherbet, or want to mince garlic. According to the second mode, the solid-type strainer 276' may be mounted in the lower assembly 275, or the lower assembly 270 with the solid-type strainer 276' integrated therewith may be used, or the solid-type strainer 286' may be mounted in the strainer drum 280.

As in the first mode, the subject to be extracted is introduced through the inlet 11 and separated into the juice and the debris by the screw assembly 200. Both the juice and the debris are moved downward along the outer surface of the screw 250.

Neither the juice nor the debris passes the solid-type strainer 276' or 286'. Accordingly, both the juice and the debris are moved downward outside the screw assembly 200, and passed through the first guide groove 111, the debris discharge opening 120 and the debris discharge port 121 in sequence, and then discharge out.

The foregoing exemplary embodiments and advantages are merely exemplary and are not to be construed as limiting the exemplary embodiments. The present teaching can be readily applied to other types of apparatuses. Also, the description of the exemplary embodiments of the present inventive concept is intended to be illustrative, and not to limit the scope of the claims.

## Claims

1. A juicer comprising a juice extracting apparatus for crushing and compressing a subject to be extracted, wherein a mesh-type strainer (276) and a solid-type strainer (276' or 286) are selectively provided in the juice extracting apparatus,
wherein the juice extracting apparatus comprises:
a hollow drum (100) ; and
a screw assembly (200) disposed within the hollow drum (100), **characterized in that** the screw assembly (200) comprises:
an upper assembly (250) provided with an extracting blade (251) on an outer surface; and
a lower assembly (270) removably coupled with the upper assembly (250),
wherein the mesh-type strainer (276) and the solid-type strainer (276') can be selectively provided in the lower assembly (270).

2. The juicer of claim 1, wherein a mesh-type strainer (276) and a solid-type strainer (276') which are detachably mounted on the lower assembly (270) are provided.

3. The juicer of claim 1, wherein an extracting rib (271) is provided on an outer surface of the lower assembly (270), and wherein when the upper assembly (250) and the lower assembly (270) are coupled with each other, the extracting blade (251) and the extracting rib (271) are continuously connected.

4. The juicer of claim 3, wherein, when the solid-type strainer (276') is provided in the juice extracting apparatus, both a juice and a debris produced by a rotation of the screw assembly (200) does not pass through the solid-type strainer (276') and do flow outside the screw assembly (200).

5. The juicer of claim 1, wherein the upper assembly (250) comprises a first portion (A) which is in a conical shape, and a second portion (B) which is in an inverted conical shape.

6. The juicer of claim 5, wherein the lower assembly (270) is in an inverted conical shape and is continuously connected to the second portion (B).

7. The juicer of claim 1, wherein a lower portion of the upper assembly (250) comprises a plurality of protrusions (253), and an upper portion of the lower assembly (270) comprises a plurality of connecting holes (273) to which the plurality of protrusions (253) can be inserted and fastened.

8. The juicer of claim 7, wherein the connecting holes (273) is formed of an 'L' shape a lower portion of which extend in a direction of rotation of the screw assembly (200).

9. A juicer comprising a juice extracting apparatus for crushing and compressing a subject to be extracted, wherein a mesh-type strainer (276) and a solid-type strainer (276' or 286) are selectively provided in the juice extracting apparatus, wherein the juice extracting apparatus comprises:
a hollow drum (100);
a screw assembly (200) disposed within the drum (100); and
a strainer drum (280) located between the screw assembly (200) and the drum (100),
**characterized in that** the mesh-type strainer (276) and the solid-type strainer (286') can be selectively provided in the strainer drum (280),
wherein a mesh-type strainer (276) and a solid-type strainer (286') which are detachably mounted to the strainer drum 280 are provided.

## Patentansprüche

1. Entsafter, umfassend eine Entsaftungsvorrichtung zum Zerkleinern und Verdichten eines zu extrahierenden Gegenstandes, wobei ein Maschensieb (276) und ein Vollmaterialsieb (276' oder 286) selektiv in der Entsaftungsvorrichtung vorgesehen sind,
wobei die Entsaftungsvorrichtung umfasst:
eine Hohltrommel (100); und
eine Schraubenanordnung (200), die innerhalb der Hohltrommel (100) angeordnet ist,
**dadurch gekennzeichnet, dass** die Schraubenanordnung (200) umfasst:
eine obere Baugruppe (250), die mit einer Extrahierklinge (251) an einer Außenfläche versehen ist; und
eine untere Baugruppe (270), die abnehmbar mit der oberen Anordnung (250) gekoppelt ist,
wobei das Maschensieb (276) und das Vollmaterialsieb (276') selektiv in der unteren Baugruppe (270) vorgesehen sein können.

2. Entsafter nach Anspruch 1, wobei ein Maschensieb (276) und ein Vollmaterialsieb (276') vorgesehen sind, die abnehmbar an der unteren Anordnung (270) befestigt sind.

3. Entsafter nach Anspruch 1, wobei eine Extrahierrippe (271) an einer Außenfläche der unteren Baugruppe (270) vorgesehen ist, und wobei, wenn die obere Baugruppe (250) und die untere Baugruppe (270) miteinander gekoppelt sind, die Extrahierklinge (251) und die Extrahierrippe (271) kontinuierlich verbunden sind.

4. Entsafter nach Anspruch 3, wobei, wenn das Vollmaterialsieb (276') in der Entsaftungsvorrichtung vorgesehen ist, sowohl ein Saft als auch ein durch eine Drehung der Schraubenanordnung (200) erzeugter Rückstand nicht durch das Vollmaterialsieb (276') hindurchtritt und außerhalb der Schraubenanordnung (200) fließt.

5. Entsafter nach Anspruch 1, wobei die obere Baugruppe (250) einen ersten Abschnitt (A) umfasst, der konisch geformt ist, und einen zweiten Abschnitt (B), der umgekehrt konisch geformt ist.

6. Entsafter nach Anspruch 5, wobei die untere Baugruppe (270) umgekehrt konisch geformt ist und kontinuierlich mit dem zweiten Abschnitt (B) verbunden ist.

7. Entsafter nach Anspruch 1, wobei ein unterer Abschnitt der oberen Baugruppe (250) eine Vielzahl von Vorsprüngen (253) aufweist und ein oberer Abschnitt der unteren Baugruppe (270) eine Vielzahl von Verbindungslöchern (273) aufweist, in denen die Vielzahl von Vorsprüngen (253) eingesetzt und befestigt werden kann.

8. Entsafter nach Anspruch 7, wobei die Verbindungslöcher (273) in einer "L"-Form ausgebildet sind, von der sich ein unterer Abschnitt in einer Drehrichtung der Schraubenanordnung (200) erstreckt.

9. Entsafter, umfassend eine Entsaftungsvorrichtung zum Zerkleinern und Verdichten eines zu extrahierenden Gegenstandes, wobei ein Maschensieb (276) und ein Vollmaterialsieb (276' oder 286) selektiv in der Entsaftungsvorrichtung vorgesehen sind, wobei die Entsaftungsvorrichtung umfasst:
eine Hohltrommel (100);
eine Schraubenanordnung (200), die innerhalb der Trommel (100) angeordnet ist, und
eine Siebtrommel (280), die zwischen der Schraubenanordnung (200) und der Trommel angeordnet ist,
**dadurch gekennzeichnet, dass** das Maschensieb (276) und das Vollmaterialsieb (286') selektiv in der Siebtrommel (280) vorgesehen sein können,
wobei ein Maschensieb (276) und ein Vollmaterialsieb (286') vorgesehen sind, die abnehmbar an der Siebtrommel (280) befestigt sind.

## Revendications

1. Presse-agrumes comprenant un appareil d'extraction de jus destiné à broyer et à comprimer un sujet à extraire, dans lequel un filtre à maillage (276) et un filtre plein (276' ou 286) sont prévus sélectivement dans l'appareil d'extraction de jus,
dans lequel l'appareil d'extraction de jus comprend :
un tambour creux (100) ; et
un ensemble de vis (200) disposé dans le tambour creux (100),
**caractérisé en ce que** l'ensemble de vis (200) comprend :
un ensemble supérieur (250) muni d'une lame d'extraction (251) sur une surface externe ; et
un ensemble inférieur (270) relié de manière amovible à l'ensemble supérieur (250),
dans lequel le filtre à maillage (276) et le filtre plein (276') peuvent être prévus sélectivement dans l'ensemble inférieur (270).

2. Presse-agrumes selon la revendication 1, dans lequel un filtre à maillage (276) et un filtre plein (276') qui sont montés de manière amovible sur l'ensemble inférieur (270) sont prévus.

3. Presse-agrumes selon la revendication 1, dans lequel une nervure d'extraction (271) est prévue sur une surface externe de l'ensemble inférieur (270), et dans lequel, lorsque l'ensemble supérieur (250) et l'ensemble inférieur (270) sont reliés l'un à l'autre, la lame d'extraction (251) et la nervure d'extraction (271) sont reliées en continu.

4. Presse-agrumes selon la revendication 3, dans lequel, lorsque le filtre plein (276') est prévu dans l'appareil d'extraction de jus, un jus et un résidu produits par une rotation de l'ensemble de vis (200) ne passent pas par le filtre plein (276') et s'écoulent en-dehors de l'ensemble de vis (200).

5. Presse-agrumes selon la revendication 1, dans lequel l'ensemble supérieur (250) comprend une première partie (A) qui est de forme conique, et une seconde partie (B) qui est de forme conique inversée.

6. Presse-agrumes selon la revendication 5, dans lequel l'ensemble inférieur (270) est de forme conique inversée et est relié en continu à la seconde partie (B).

7. Presse-agrumes selon la revendication 1, dans lequel une partie inférieure de l'ensemble supérieur (250) comprend une pluralité de saillies (253), et une partie supérieure de l'ensemble inférieur (270) comprend une pluralité d'orifices de liaison (273) dans lesquels la pluralité de saillies (253) peut être insérée et fixée.

8. Presse-agrumes selon la revendication 7, dans lequel les orifices de liaison (273) sont en forme de L, dont une partie inférieure s'étend dans une direction de rotation de l'ensemble de vis (200).

9. Presse-agrumes comprenant un appareil d'extraction de jus destiné à broyer et à comprimer un sujet à extraire, dans lequel un filtre à maillage (276) et un filtre plein (276' ou 286) sont sélectivement prévus dans l'appareil d'extraction de jus, dans lequel l'appareil d'extraction de jus comprend :
un tambour creux (100) ;
un ensemble de vis (200) disposé dans le tambour (100) ; et
un tambour de filtre (280) situé entre l'ensemble de vis (200) et le tambour (100),
**caractérisé en ce que**
le filtre à maillage (276) et le filtre plein (286') peuvent être sélectivement prévus dans le tambour de filtre (280),
dans lequel un filtre à maillage (276) et un filtre plein (286') qui sont montés de manière amovible sur le tambour de filtre (280) sont prévus.
